# FASCICULE DE BREVET EUROPEEN

(11) **EP 0 681 355 B1**
(45) Date de publication et mention de la délivrance du brevet: **04.08.1999**
(21) Numéro de dépôt: 95410039.2
(22) Date de dépôt: 02.05.1995
(51) Int. Cl.: H02G 5/00

(54) **Dispositif de jeu de barres, notamment pour une armoire de distribution électrique**
Sammelschienenanordnung, insbesondere für eine Energieverteilungsschrank
Bus bar device, especially for a distribution cabinet

(30) Priorité: 06.05.1994 FR 9405865
(43) Date de publication de la demande: 08.11.1995
(73) Titulaire: SCHNEIDER ELECTRIC SA, 92100 Boulogne Billancourt (FR)
(72) Inventeur: Carle, Pierre, F-38050 Grenoble Cedex 09 (FR); Gerbier, Philippe, F-38050 Grenoble Cedex 09 (FR); Vigne-Salade, Pierre, F-38050 Grenoble Cedex 09 (FR)
(74) Mandataire: Hecké, Gérard

(56) Documents cités:
- EP-A- 0 589 775
- DE-B- 1 041 129
- DE-U- 7 709 147
- FR-A- 1 206 361
- FR-A- 2 320 650
- FR-A- 2 515 856
- US-A- 3 538 390

## Description

La présente invention est relative à un dispositif de jeu de barres pour une installation d'alimentation et/ou de distribution électrique, comprenant :
- des conducteurs de courant formés par des profilés allongés réalisés en un matériau bon conducteur de l'électricité, notamment à base de cuivre ou d'aluminium,
- au moins un bloc support isolant composé d'une première pièce de fixation venant en engagement avec une deuxième pièce de fixation pour constituer une pluralité de logements individuels pour la réception de chaque conducteur de courant, ledit support isolant s'étendant perpendiculairement par rapport à la direction longitudinale des profilés,
- des encoches semi-ouvertes pratiquées dans la première et/ou la deuxième pièce de fxation du côté de l'interface d'assemblage pour délimiter lesdits logements,
- et des moyens d'assemblage pour assurer le serrage des deux pièces de fixation l'une contre l'autre au niveau dudit interface.

Dans le document DE-A-3143 518 ( FR-A-2515856) un bloc auxiliaire est décalé en arrière par rapport au bloc principal, lequel comporte des encoches semi-ouvertes pour le logement des trois conducteurs coplanaires en formes de barres. Au niveau du bloc principal, un jeu de cales enfichables sont indispensables pour recevoir des conducteurs de différentes dimensions dans un même support isolant. L'usage de ces cales permet un réglage de largeur et en hauteur en fonction de la section spécifique des barres. Le raccordement des barres s'effectue dans des directions orthogonales.

Le document DE-GM 77 09 147 montre également des barres conductrices méplates insérées dans des logements d'un support avec interposition de cales dans le fond des encoches. La profondeur des encoches correspond à un multiple de l'épaisseur de chaque barre.

L'enseignement de cet art antérieur montre que la totalité des conducteurs de courant se trouve dans un même plan au niveau de l'interface d'assemblage des deux pièces de fixation du support isolant. Il est alors indispensable de déformer les conducteurs de connexion de l'appareillage électrique, pour éviter tout contact avec une barre de phase différente, ce qui complique l'installation de l'armoire électrique.

Le document FR-A-1206361 décrit une canalisation électrique logée dans un boîtier allongée en tôle, et renfermant des isolateurs ayant des surfaces d'appui en gradins destinées à supporter des barres conductrices décalées. Chaque isolateur comprend une seule pièce ayant des décrochements internes, la fixation de chaque barre s'effectuant au moyen d'équerres et de boulons. La connexion électrique est assurée par des cosses de liaison fixées directement sur les barres, et reliées à l'extérieur du boîtier par des conducteurs devant traverser des ouvertures ménagées dans le boîtier.

L'objet de l'invention consiste à améliorer le raccordement électrique de l'appareillage avec le jeu de barres d'alimentation ou de distribution d'une armoire.

Le dispositif de jeu de barres selon l'invention est caractérisé en ce que:
- les fonds respectifs des encoches se trouvent dans des plans distincts s'étendant parallèlement le long de la direction longitudinale des profilés, en étant séparés les uns des autres par un pas transversal prédéterminé,
- les profilés des conducteurs de courant sont échelonnés à intervalles réguliers dans la direction d'extension de l'interface d'assemblage des pièces de fixation pour former une structure en gradins,
- chaque conducteur de courant comporte une partie à section en forme de C et une face de contact plane, à laquelle peut être connecté un conducteur de liaison à l'extérieur du bloc support isolant, le raccordement s'effectuant dans une position longitudinale prédéterminée au moyen d'un dispositif de connexion ayant une vis à tête logée à l'intérieur du C, et un écrou accessible depuis l'extérieur, les différentes faces de contact étant agencées dans des plans parallèles à la direction transversale, et décalées selon le pas de raccordement,
- la largeur de chaque encoche de la première et/ou de la deuxième pièce de fixation correspond à la largeur des conducteurs de courant, mesurée à partir de la face de contact dans la direction de l'interface d'assemblage du bloc support isolant.

La présence du décalage transversal des conducteurs de courant autorise un accès par l'avant pour raccorder les conducteurs de liaison aux faces de contact des conducteurs du jeu de barres. Les conducteurs de liaison peuvent être rectilignes, et, ne nécessitent aucune déformation, étant donné que les différentes faces de contact se trouvent dans des plans différents.

La disposition verticale du jeu de barres permet l'alimentation électrique de deux séries d'appareillage situées le long des faces opposées du jeu de barres.

D'autres avantages et caractéristiques ressortiront plus clairement de la description qui va suivre d'un mode de réalisation de l'invention donné à titre d'exemple non limitatif, et représenté aux dessins annexés, dans lesquels :
- les figures 1 à 8 montrent différentes formes de profilés utilisés comme conducteurs de courant du jeu de barres ;
- la figure 9 représente une vue schématique éclatée et en plan du jeu de barres selon l'invention ;
- la figure 10 est une vue en coupe selon la ligne 10-10 de la figure 12 ;
- la figure 11 est une vue identique de la figure 10 d'une variante de réalisation ;
- la figure 12 est une vue en perspective du jeu de barres multipolaire selon l'invention ;
- la figure 13 est une vue en coupe selon la ligne 13-13 de la figure 12 ;
- la figure 14 est une vue en perspective d'une installation avec des rangées doubles symétriques;
- la figure 15 montre une vue en perspective d'une entretoise de séparation du jeu de barres avec le compartiment de l'appareillage électrique.

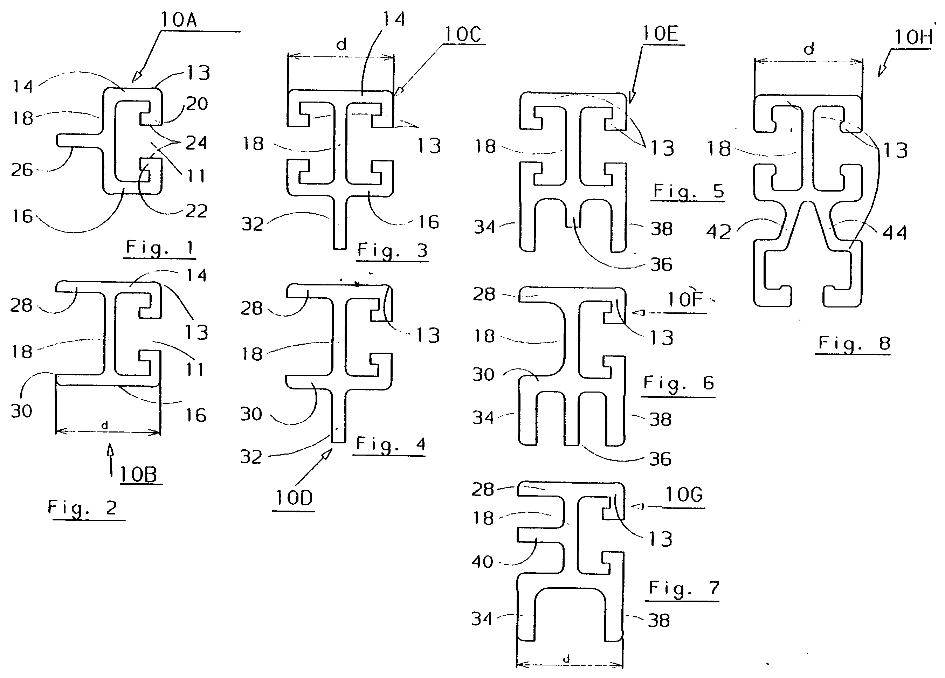

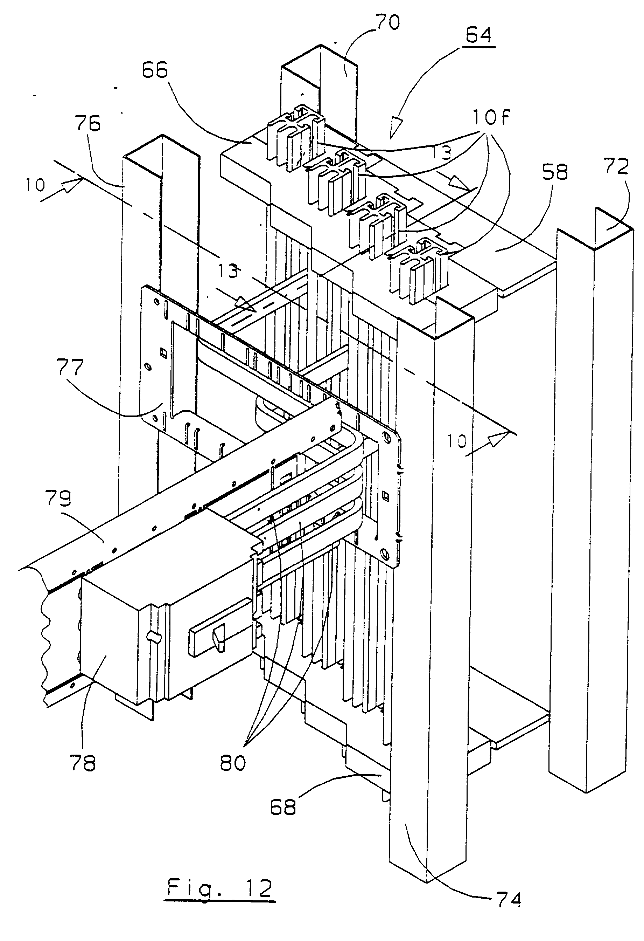

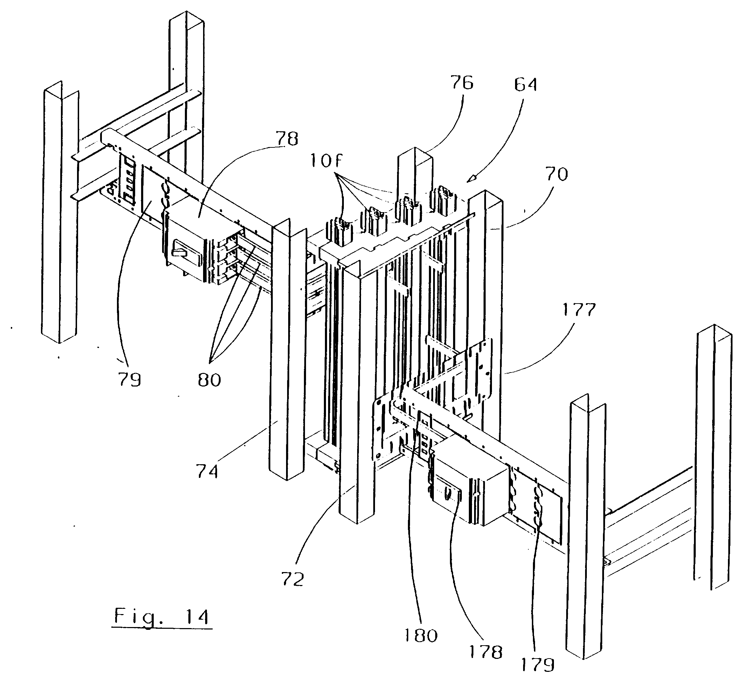

Selon les figures 1 à 8, les conducteurs de courant sont constitués par des profilés de différentes sections, et réalisés à partir d'un matériau bon conducteur de l'électricité. notamment du cuivre ou de l'aluminium. Ces conducteurs peuvent être utilisés dans un jeu de barres multipolaires d'une installation de distribution électrique à basse tension, qui sera décrite par la suite en référence aux figures 12 et 14.

Sur la figure 1, le profilé du conducteur de courant 10A possède une section en forme de C comprenant une rainure 11 longitudinale associée à une première et une deuxième aile 14,16 parallèles, lesquelles sont réunies à une branche 18 commune. La rainure 11 centrale est délimitée entre deux saillies 20, 22 respectives des ailes 14, 16, chaque saillie 20, 22 étant conformée en crochet ayant une arête 24 rectiligne s'étendant parallèlement aux ailes 14, 16. La largeur de la rainure 11 mesurée entre les arêtes 24 des saillies 20, 22 est inférieure à la distance séparant les deux ailes 14, 16 parallèles. L'espace interne du profilé constitue une encoche 13 semi-ouverte, dont l'accès s'effectue au niveau de la rainure 11. La branche 18 commune porte une ailette 26 centrale, agencée du côté extérieur à la rainure 11.

Selon la variante de la figure 2, le conducteur de courant 10B possède une structure similaire à celle du conducteur 10A de la figure 1. mais la branche 18 est dotée de deux ailettes 28, 30 disposées respectivement dans le prolongement des ailes 14, 16.

Dans la figure 3, le profilé du conducteur 10C comporte deux encoches 13 identiques, disposées systématiquement dos à dos au niveau de la branche 18 commune. Une ailette 32 s'étend dans le prolongement de la branche 18 et perpendiculairement à l'aile 16. Le conducteur peut être aussi réalisé sans l'ailette 32.

La structure du conducteur 10D de la figure 4 est similaire à celle de la figure 2, avec une ailette 32 supplémentaire dans le prolongement de la branche 18 commune.

Le conducteur 10E de la figure 5 est similaire à celui de la figure 3, avec trois ailettes 34, 36, 38 parallèles dirigées vers le bas. L'ailette centrale 36 se trouve dans le prolongement de la branche 18, et est plus courte que les deux autres ailettes 34. 38 adjacentes. Le profilé 10F de la figure 6 correspond à celui de la figure 4 mais avec trois ailettes 34, 36, 38 inférieures de mêmes longueurs.

Le conducteur de courant 10G de la figure 7 est équipé de deux ailettes 28, 40 horizontales et deux ailettes 34, 38 verticales. La totalité des conducteurs de courant 10C à 10G illustrés sur les figures 3 à 7, présente des profilés de mêmes encombrements 30 x 45 mm.

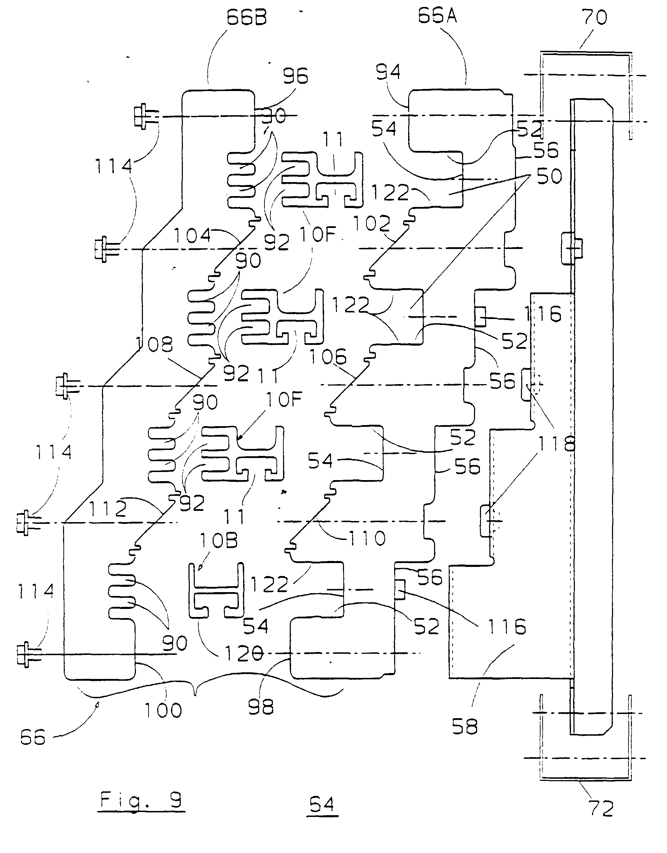

Sur la figure 8, le profilé du conducteur 10H est doté de trois encoches 13 en C, dont les deux supérieures sont accolées l'une à l'autre par la branche 18. La liaison avec la troisième encoche 13 inférieure s'effectue au moyen d'ailettes 42, 44 inclinées. L'encombrement du conducteur 10H correspond à 30 x 60 mm.

La distance d correspondant à une largeur de 30 mm est identique pour tous les profilés des conducteurs 10A à 10H. La hauteur de 30 mm est également la même pour la première série des deux conducteurs 10A et 10B. Elle est de 45 mm pour tous les conducteurs 10C à 10G de la deuxième série, et atteint 60 mm pour le dernier conducteur 10H. La variation du pas dans le sens de la hauteur est de 15 mm d'une série à l'autre.

Les ailettes des différents conducteurs de courant 10A à 10H font partie intégrante des profilés et sont parcourues par le courant. Il en résulte une double fonction de conduction électrique et de dissipation thermique au moyen d'un profilé réalisé en une seule pièce.

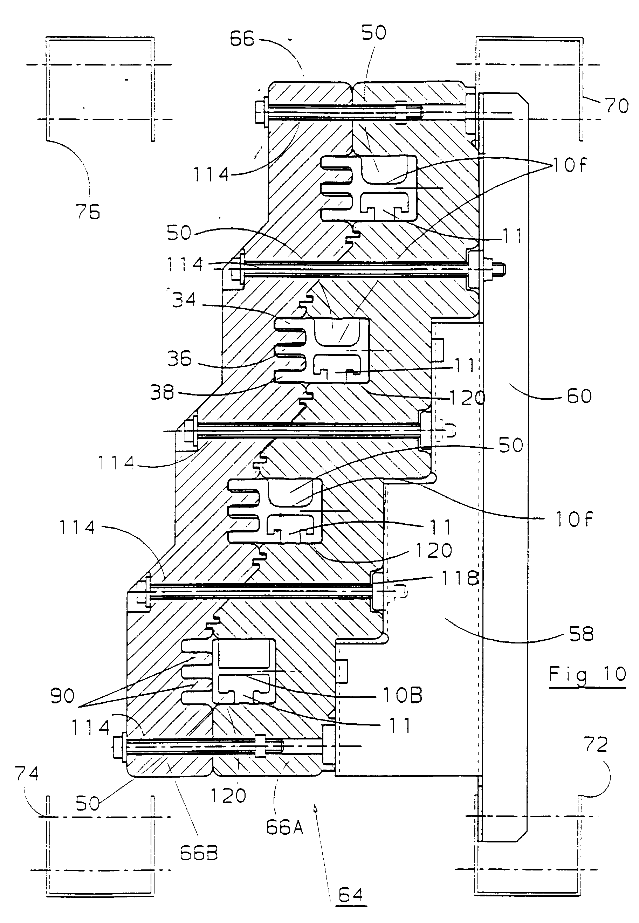

En référence aux figures 9 et 10, chaque type de conducteurs de courant 10A à 10H, représentés sur les figures 1 à 8, peut être inséré dans au moins un bloc support isolant 66, 68 pour constituer un dispositif de jeu de barres 64 multipolaire. Le choix du type de conducteur s'effectue en fonction du calibre d'intensité de l'armoire électrique. On fera usage des conducteurs 10A à 10B des figures 1 et 2 pour les bas calibres, ceux 10C à 10G des figures 3 à 7 pour les calibres moyens, et le conducteur 10H de la figure 8 pour les calibres élevés.

Dans la figure 9, le bloc support isolant 66 comporte deux pièces de fixation 66A, 66B destinés à être assemblées l'une contre l'autre pour former des logements 50 de réception des conducteurs de courant 10F et 10B. La première pièce de fixation 66A comprend une succession d'encoches 52 semi-ouvertes en forme de carré, dont chaque côté est légèrement supérieur à la distance d. Le conducteur de courant 10A ou 10B des figures 1 et 2 peut être inséré totalement à l'intérieur de chaque encoche 52.

Les fonds 54 respectifs des différentes encoches 52 se trouvent dans des plans distincts s'étendant parallèlement à la direction longitudinale des profilés, en étant décalés les uns des autres par des intervalles réguliers.

La première pièce de fixation 66A est équipée d'autre part d'une pluralité de faces d'appui 56 situées à l'opposé des encoches 52 respectives dans des plans parallèles décalés les uns des autres par des intervalles réguliers, dont les dimensions correspondent à ceux des fonds 54. Les différentes faces d'appui 56 de la pièce 66A forment une structure en gradins destinée à être solidarisée à des faces conjuguées d'un support métallique 58 auxiliaire. Ce dernier est doté d'une entretoise 60 rectiligne fixée à deux montants 70, 72 coplanaires du châssis. Les deux autres montants 74, 76 opposés servent à la fixation de l'entretoise 77 de support de la platine 79 (figure 12).

La deuxième pièce de fixation 66B est pourvue d'une succession de plots de positionnement 90 constituant une structure en râteau, destinée à coopérer avec les conducteurs de courant 10F et 10B pour autoriser l'assemblage du support isolant 66 indépendamment du type de conducteurs de courant. Les plots 90 inférieurs viennent directement en contact contre la surface extérieure des ailes ou ailettes du conducteur 10B au niveau du logement 50 inférieur. Dans les trois logements 50 supérieurs, les plots de positionnement 90 s'engagent à l'intérieur des rainures 92 ménagées entre les ailettes 34, 36, 38. Dans le mode de réalisation des figures 9 et 10, les plots 90 viennent du moulage avec la deuxième pièce de fixation 66B.

Chaque pièce de fixation 66A, 66B (figure 9) est équipée en plus d'une première paire de faces de liaison 94, 96 à la partie supérieure, d'une deuxième paire de faces de liaison 98, 100 à la partie inférieure, et de trois paires de faces de liaison 102, 104 ; 106, 108 ; 110, 112 intermédiaires. Les faces de liaison de chaque paire viennent en contact l'une avec l'autre lors de l'assemblage des deux pièces de fixation 66A, 66B au moyen de vis 114 traversant des orifices alignés pratiqués dans le corps isolant des deux pièces 66A, 66B accolées.

Au moins une face d'appui 56 de la première pièce de fixation 66A est munie d'un ergot 116 d'accrochage coopérant avec le support métallique 58 pour assurer le centrage des vis 114 par rapport à des écrous 118 solidaires du support 58.

En position assemblée du bloc support 66, les faces de liaison 94, 96 ; 98, 100 respectives des première et deuxième paires se trouvent dans des plans parallèles à la direction longitudinale, tandis que les autres faces 102, 104 ; 106, 108, 110, 110 sont situées deux à deux dans trois plans parallèles inclinés par rapport à la même direction longitudinale.

Sur la figure 10, il ressort que le décalage transversal des rainures 11 agencées au droit des faces de contact 120 des différents conducteurs 10F et 10B, s'opère avec un pas régulier, par exemple de 22 millimètres. Un tel décalage transversal des conducteurs de courant 10F et 10B autorise un accès par l'avant à chaque rainure 11 pour le raccordement des conducteurs de liaison 80 préfabriqués de l'appareillage électrique 78 fixé sur la platine 79 (voir figure 12).

En référence à la figure 9, les parois latérales encadrant le fond 54 de chaque encoche 52 de la première pièce de fixation 66A comportent au moins une protubérance 122 dans la zone médiane pour constituer un point dur de maintien du conducteur de courant à l'intérieur du logement 50.

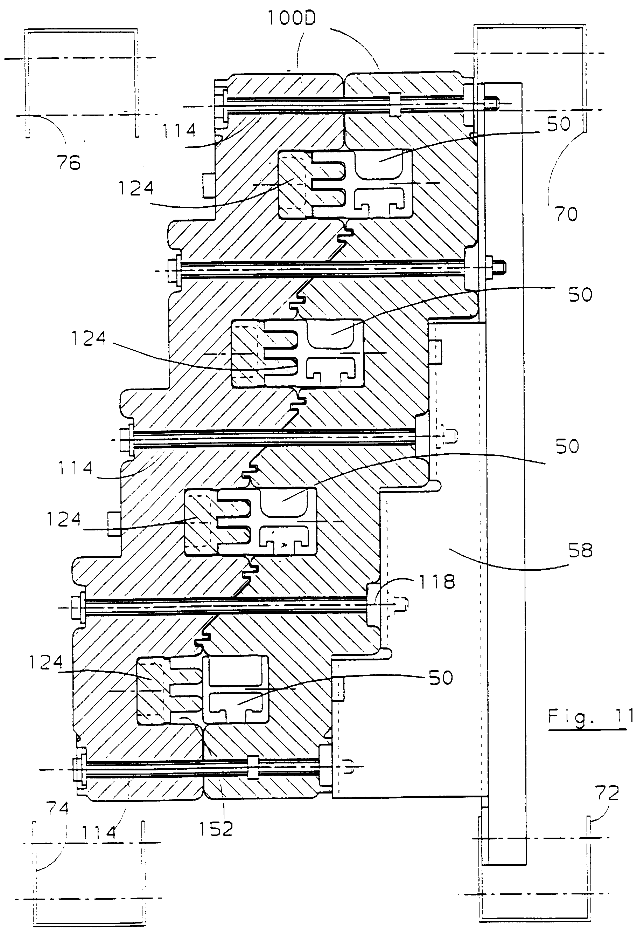

Dans le mode de réalisation de la figure 11, la structure de la deuxième pièce de fixation 166B est identique à celle de la première pièce 66A, avec une disposition inversée de 180 degrés lors de la phase d'assemblage. Les plots de positionnement sont agencés sur des cales 124 amovibles susceptibles d'être rapportées dans les encoches 152 de la deuxième pièce de fixation 166B. La mise en place des cales 124 dans les encoches 152 est obligatoire lors de l'usage des conducteurs de courant 10A à 10G. Il suffit simplement d'enlever les cales 124 lors de l'usage du conducteur 10H de la figure 8.

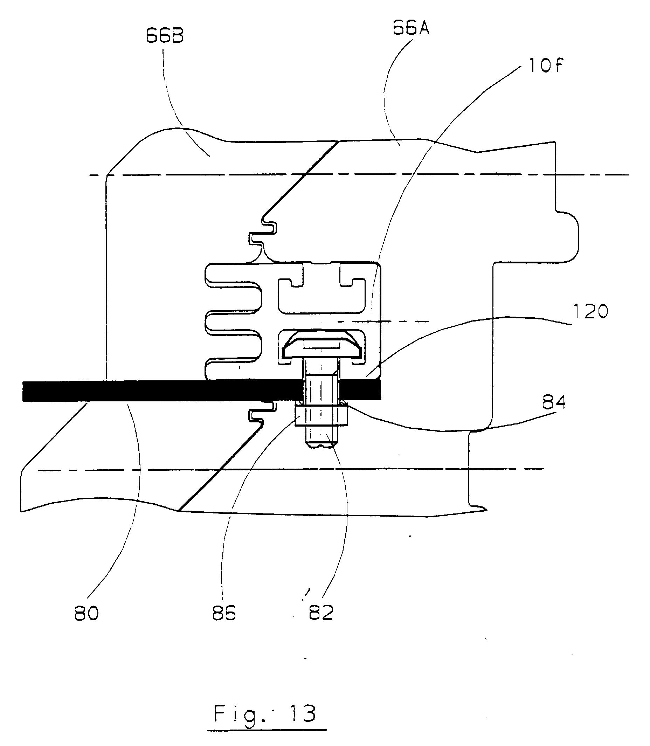

La figure 13 montre le dispositif de connexion au niveau d'un conducteur de courant 10F. Le dispositif de connexion comporte une vis de fixation 82 dont la tête est logée de manière imperdable à l'intérieur de l'encoche 13 du profilé. La tige filetée de la vis 82 s'étend à travers la rainure 11 vers l'extérieur du profilé, en traversant un trou 84 ménagé à l'extrémité du conducteur de liaison 80. Un écrou 86, accessible de l'extérieur, coopère avec la vis 82 pour assurer le serrage du conducteur 80 contre la face de contact 120 du profilé.

En référence à la figure 14, la partie de gauche correspond à l'architecture de la figure 12, associée au jeu de barres 64 multipolaire à disposition verticale. Il est possible d'adjoindre sur la partie de droite d'autres rangées de platines, dont l'une est représentée par la référence 179, fixée aux montants 70, 72 par une deuxième entretoise 177 réversible. Il en résulte que deux appareillages électriques 78, 178 peuvent être montés face à face en garantissant l'accès aux raccordements par l'avant au moyen du même jeu de barres 64 intercalaire.

Il est possible d'obturer les traversées des conducteurs de liaison 80, 180 au niveau des entretoises 77, 177 de manière à cloisonner les compartiments latéraux de l'appareillage par rapport à celui du jeu de barres 64.

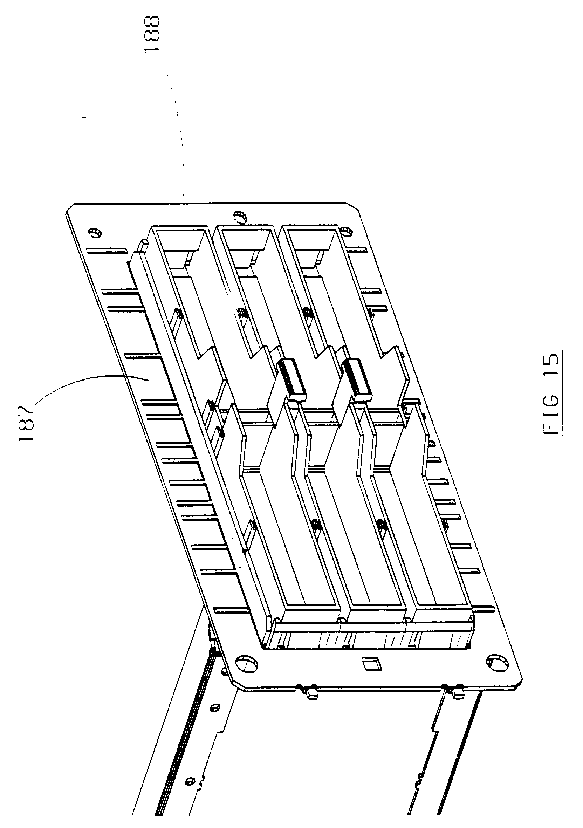

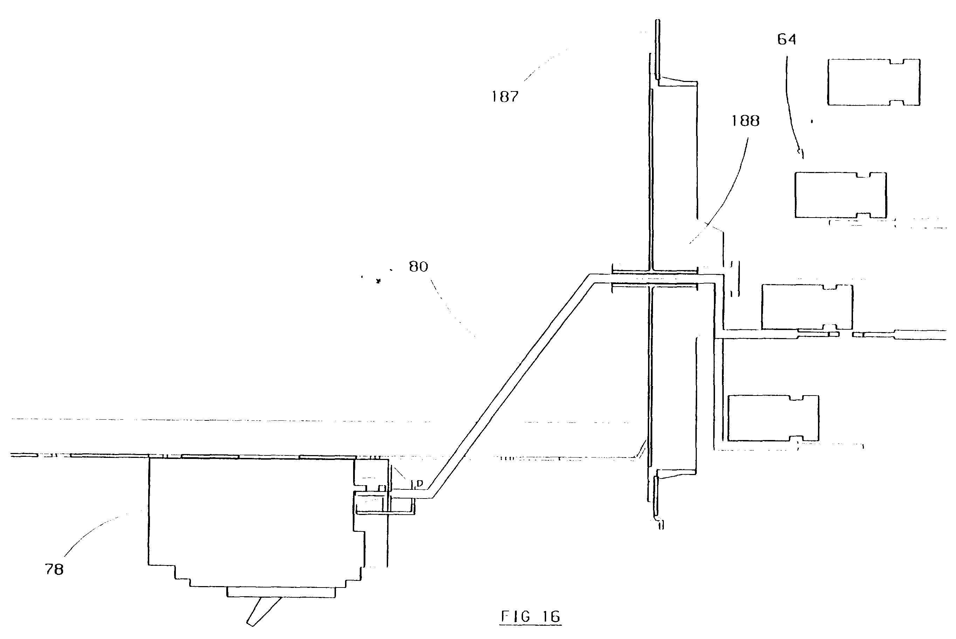

Un exemple de traversée étanche est représenté sur l'entretoise 187 des figures 15 et 16, permettant d'obtenir un bloc de raccordement intégré, par exemple pour un calibre de 250A.

La partie centrale de l'entretoise 187 comporte un boîtier isolant 188 à éléments unipolaires traversés au niveau de chaque phase par des conducteurs 80 souples isolés pour le raccordement de l'appareillage 78 au jeu de barres 64.

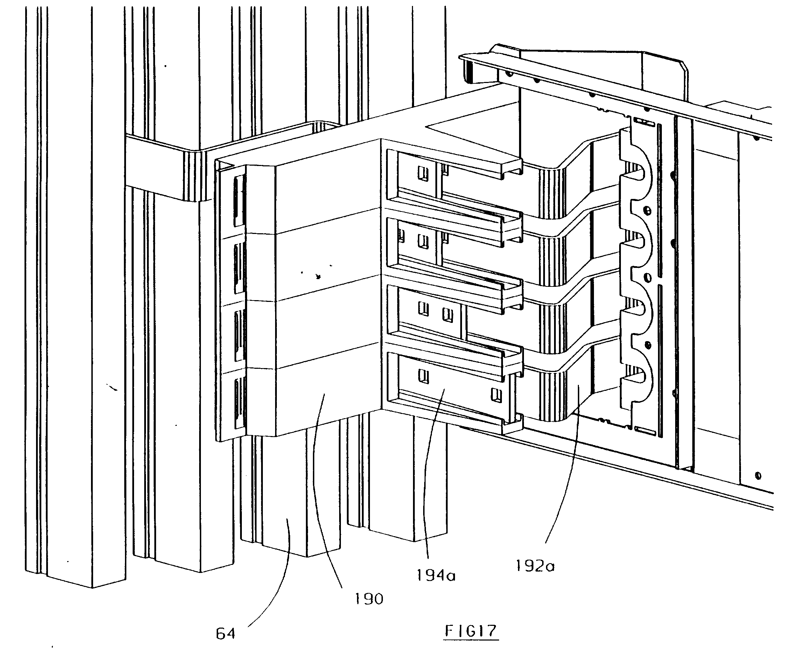

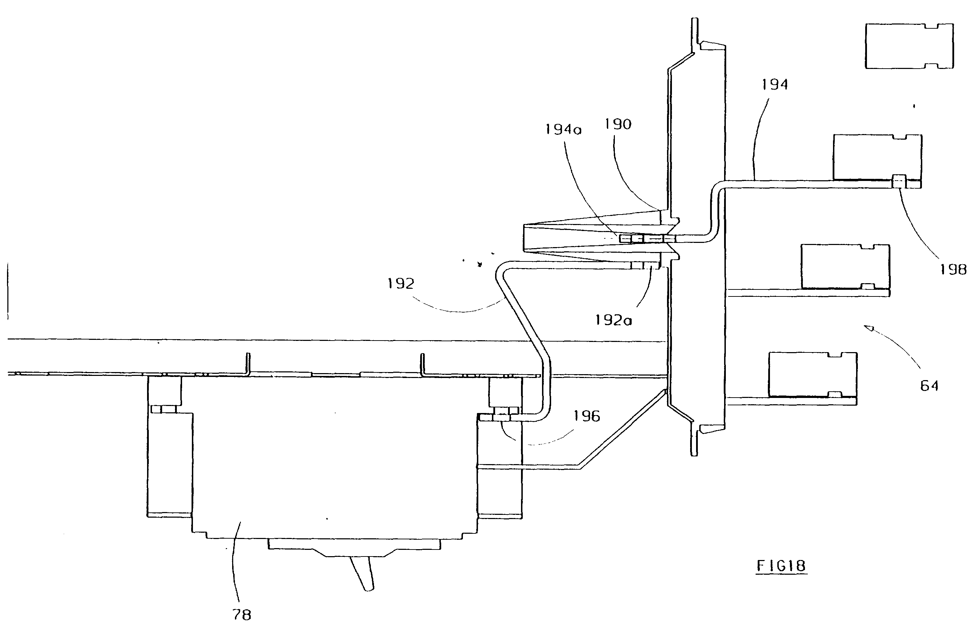

Selon la variante de réalisation représentée sur les figures 17 et 18, appliquée à un tableau électrique ayant un calibre de 450A-630A, l'entretoise 187 est également équipée d'un boîtier isolant 190 à éléments unipolaires. Le raccordement électrique de l'appareillage 78 au jeu de barres 64 s'opère au niveau de chaque phase par deux conducteurs élémentaires 192, 194 conformés en barres rigides nues, connectées respectivement à l'appareil 78 au point 196, et à la barre correspondante au point 198. Au niveau du boîtier 190, les extrémités 192a et 194a des conducteurs sont disposées en regard l'une de l'autre, et assemblées entre elles au moyen d'organe de fixation.

## Revendications

1. Dispositif de jeu de barres pour une installation d'alimentation et/ou de distribution électrique, comprenant :
- des conducteurs de courant (10A à 10H) formés par des profilés allongés réalisés en un matériau bon conducteur de l'électricité, notamment à base de cuivre ou d'aluminium,
- au moins un bloc support isolant (66) composé d'une première pièce de fixation (66A) venant en engagement avec une deuxième pièce de fixation (66B, 166B) pour constituer une pluralité de logements (50) individuels pour la réception de chaque conducteur de courant, ledit support isolant (66) s'étendant perpendiculairement par rapport à la direction longitudinale des profilés,
- des encoches (52, 152) semi-ouvertes pratiquées dans la première et/ou la deuxième pièce de fixation du côté de l'interface d'assemblage pour délimiter lesdits logements (50),
- et des moyens d'assemblage pour assurer le serrage des deux pièces de fixation (66A), (66B, 166B) l'une contre l'autre au niveau dudit interface,
caractérisé en ce que :
- les fonds (54) respectifs des encoches (52, 152) se trouvent dans des plans distincts s'étendant parallèlement le long de la direction longitudinale des profilés, en étant séparés les uns des autres par un pas transversal prédéterminé,
- les profilés des conducteurs de courant (10A à 10H) sont échelonnés à intervalles réguliers dans la direction d'extension de l'interface d'assemblage des pièces de fixation (66A, 66B, 166B) pour former une structure en gradins,
- chaque conducteur de courant (10A à 10H) comporte une partie à section en forme de C et une face de contact (120) plane, à laquelle peut être connecté un conducteur de liaison (80, 180) à l'extérieur du bloc support isolant (66), le raccordement s'effectuant dans une position longitudinale prédéterminée au moyen d'un dispositif de connexion ayant une vis (82) à tête logée à l'intérieur du C, et un écrou (86) accessible depuis l'extérieur, les différentes faces de contact (120) étant agencées dans des plans parallèles à la direction transversale, et décalées selon le pas de raccordement,
- la largeur de chaque encoche (52) de la première et/ou de la deuxième pièce de fixation (66A, 66B) correspond à la largeur des conducteurs de courant (10A à 10H), mesurée à partir de la face de contact (120) dans la direction de l'interface d'assemblage du bloc support isolant (66).

2. Dispositif de jeu de barres selon la revendication 1, caractérisé en ce que chaque encoche (52) de la première pièce de fixation (66A) est conformée selon un carré.

3. Dispositif de jeu de barres selon la revendication 1, caractérisé en ce que la deuxième pièce de fixation (66B) est équipée de plots de positionnement (90) coopérant avec les conducteurs de courant (10A à 10H) pour assurer leur calage dans la direction transversale.

4. Dispositif de jeu de barres selon la revendication 3, caractérisé en ce que les plots de positionnement (90) font partie intégrante de la deuxième pièce de fixation (66B).

5. Dispositif de jeu de barres selon la revendication 3, caractérisé en ce que les plots de positionnement (90) sont agencés sur des moyens de calage (124) amovibles susceptibles d'être rapportés dans les encoches (152) de la deuxième pièce de fixation (166B).

6. Dispositif de jeu de barres selon l'une des revendications 1 à 5, caractérisé en ce que la paroi latérale de chaque encoche (52, 152) semi-ouverte comporte une protubérance (122) pour constituer un organe de maintien du conducteur de courant à l'intérieur du logement (50).

7. Dispositif de jeu de barres selon l'une des revendications 1 à 6, caractérisé en ce que la première pièce de fixation (66A) comporte une pluralité de faces d'appui (56) agencées en gradins à l'opposé des encoches (50) pour coopérer avec des faces conjuguées d'un support métallique (58) auxiliaire, lequel est fixé au châssis.

8. Dispositif de jeu de barres selon l'une des revendications 1 à 7, caractérisé en ce que les conducteurs de liaison (80, 180, 192, 194) entre l'appareillage (78) et le jeu de barres (64) sont agencés en un bloc de raccordement intégré, chaque conducteur traversant un boîtier (188, 190) isolant à éléments unipolaires séparant le compartiment du jeu de barres de celui de l'appareillage.

## Patentansprüche

1. Sammelschienenanordnung für eine elektrische Einspeise- und/oder Verteileranlage mit
- als längliche Profile Stromleitern (10A bis 10H) aus einem Material guter elektrischer Leitfähigkeit, insbesondere auf Kupfer- oder Aluminiumbasis,
- mindestens einem Isolierstoffträger (66), der aus einem ersten Befestigungsteil (66A) sowie einem, zur Bildung mehrerer Einzelaufnahmen (50) für den Einbau jedes Stromleiters auf diesen aufgelegten, zweiten Verbindungsteil (66B, 166B) besteht, wobei der genannte Isolierstoffträger (66) senkrecht zur Längsrichtung der Profile angeordnet ist,
- im ersten und/oder zweiten Befestigungsteil auf der Seite ihrer Stoßfuge zur Begrenzung der genannten Aufnahmen (50) ausgebildeten, halboffenen Ausnehmungen (52, 152)
- sowie Verbindungsmitteln zur Gewährleistung einer sicheren gegenseitigen Verbindung der beiden Befestigungsteile (66A), (66B, 166B) an der genannten Stoßfuge,
dadurch gekennzeichnet, daß
- die Grundflächen (54) der einzelnen Ausnehmungen (52, 152) in jeweils unterschiedlichen Ebenen angeordnet sind, welche parallel zur Längsrichtung der Profile verlaufen und jeweils um ein bestimmtes Querteilungsmaß gegeneinander versetzt sind,
- die Profile der Stromleiter (10A à 10H) zur Bildung einer Stufenanordnung in Ausbreitungsrichtung der Stoßfuge der Befestigungsteile (66A, 66B, 166B) in gleichmäßigen Abständen versetzt zueinander angeordnet sind,
- jeder Stromleiter (10A bis 10H) einen Abschnitt mit C-förmigem Querschnitt sowie eine ebene Kontaktfläche (120) aufweist, an die ein aus dem Isolierstoffträger (66) herausgeführter Verbindungsleiter (80, 180) angeschlossen werden kann, wobei der Anschluß in einer bestimmten Längsposition unter Zuhilfenahme einer Verbindungsvorrichtung erfolgt, die eine Schraube (82) mit einem in das C-Profil eingesetztem Kopf sowie eine von außen zugängliche Mutter (86) umfaßt, und die verschiedenen Kontaktflächen (120) in parallel zur Querrichtung verlaufenden Ebenen angeordnet und jeweils entsprechend dem Anschlußteilungsmaß gegeneinander versetzt sind,
- und die Breite jeder Ausnehmung (52) des ersten und/oder zweiten Befestigungsteils (66A, 66B) jeweils der Breite der Stromleiter (10A bis 10H), gemessen ab der Kontaktfläche (120) in Richtung der Stoßfuge des Isolierstoffträgers (66) entspricht.

2. Sammelschienenanordnung nach Anspruch 1, dadurch gekennzeichnet, daß jede Ausnehmung (52) des ersten Befestigungsteils (66A) eine quadratische Form aufweist.

3. Sammelschienenanordnung nach Anspruch 1, dadurch gekennzeichnet, daß das zweite Befestigungsteil (66B) Positionierfinger (90) aufweist, die mit den Stromleitern (10A bis 10H) zusammenzuwirken, um deren Positionierung in Querrichtung zu gewährleisten.

4. Sammelschienenanordnung nach Anspruch 3, dadurch gekennzeichnet, daß die Positionierfinger (90) einstückig mit dem zweiten Befestigungsteil (66B) ausgeführt sind.

5. Sammelschienenanordnung nach Anspruch 3, dadurch gekennzeichnet, daß die Positionierfinger (90) in beweglichen Distanzstücken (124) ausgebildet sind, die in die Ausnehmungen (152) des zweiten Befestigungsteils (166B) eingesetzt werden können.

6. Sammelschienenanordnung nach einem der Ansprüche 1 bis 5, dadurch gekennzeichnet, daß die Seitenwand jeder halboffenen Ausnehmung (52, 152) einen Vorsprung (122) aufweist, der eine Haltevorrichtung für den Stromleiter im Innern der Ausnehmung (50) bildet.

7. Sammelschienenanordnung nach einem der Ansprüche 1 bis 6, dadurch gekennzeichnet, daß das erste Befestigungsteil (66A) mehrere, den Ausnehmungen (50) gegenüberliegende, abgestufte Auflageflächen (56) aufweist, die dazu dienen, mit angepaßten Flächen eines am Traggestell befestigten Hilfs-Metallträgers (58) zusammenzuwirken.

8. Sammelschienenanordnung nach einem der Ansprüche 1 bis 7, dadurch gekennzeichnet, daß die zwischen dem Schaltgerät (78) und den Sammelschienen (64) geführten Verbindungsleiter (80, 180, 192, 194) als integrierter Anschlußblock ausgebildet sind, wobei jeder Leiter durch ein Isolierstoffgehäuse (188, 190) mit Einzelpolelementen geführt ist, das den Sammelschienenraum vom Schaltgeräteraum trennt.

## Claims

1. A busbar device for an electrical power supply and/or distribution installation, comprising :
- current conductors (10A to 10H) formed by elongate profiled sections made from a good electrical conducting material, notably copper or aluminium based,
- at least one insulating support block (66) composed of a first fixing part (66A) coming into engagement with a second fixing part (66B, 166B) to constitute a plurality of individual housings (50) to receive each current conductor, said insulating support (66) extending perpendicularly with respect to the longitudinal direction of the profiled sections,
- semi-open recesses (52, 152) made in the first and/or second fixing part on the assembly interface side to bound said housings (50),
- and assembly means to perform tightening of the two fixing parts (66A, 66B, 166B) against one another at the level of said interface,
characterized in that :
- the respective bottoms (54) of the recesses (52, 152) are located in distinct planes extending in a parallel manner along the longitudinal direction of the profiled sections, and separated from one another by a preset transverse pitch,
- the profiled sections of the current conductors (10A to 10H) are staggered at regular intervals in the extension direction of the assembly interface of the fixing parts (66A, 66B, 166B) to form a stepped structure,
- each current conductor (10A to 10H) comprises a part with a C-shaped cross section and a flat contact face (120), to which a connecting conductor (80, 180) can be connected outside the insulating support block (66), connection being performed in a preset longitudinal position by means of a connecting device having a screw (82) with its head housed inside the C and a nut (86) accessible from outside, the different contact faces (120) being arranged in planes parallel to the transverse direction and staggered according to the connection pitch,
- the width of each recess (52) of the first and/or second fixing part (66A, 66B) corresponds to the width of the current conductors (10A to 10H), measured from the contact face (120) in the direction of the assembly interface of the insulating support block (66).

2. The busbar device according to claim 1, characterized in that each recess (52) of the first fixing part (66A) is square-shaped.

3. The busbar device according to claim 1, characterized in that the second fixing part (66B) is equipped with positioning studs (90) cooperating with the current conductors (10A to 10H) to achieve their wedging in the transverse direction.

4. The busbar device according to claim 3, characterized in that the positioning studs (90) form an integral part of the second fixing part (66B).

5. The busbar device according to claim 3, characterized in that the positioning studs (90) are arranged on removable wedging means (124) designed to be fitted in the recesses (152) of the second fixing part (166B).

6. The busbar device according to one of the claims 1 to 5, characterized in that the side wall of each semi-open recess (52, 152) comprises a protuberance (122) to constitute a part holding the current conductor inside the housing (50).

7. The busbar device according to one of the claims 1 to 6, characterized in that the first fixing part (66A) comprises a plurality of bearing faces (56) arranged in steps opposite recesses (50) to cooperate with conjugate faces of an auxiliary metallic support (58), which is fixed to the frame.

8. The busbar device according to one of the claims 1 to 7, characterized in that the connecting conductors (80, 180, 192, 194) between the switchgear (78) and busbar (64) are arranged as a built-in connection unit, each conductor passing through an insulating case (188, 190) with single-pole elements separating the busbar compartment from that of the switchgear.
